# EUROPEAN PATENT APPLICATION

(11) **EP 2 924 962 A1**
(43) Date of publication of application: **30.09.2015**
(21) Application number: 14166315.3
(22) Date of filing: 29.04.2014
(51) Int. Cl.: H04M 1/253, H04M 1/2745, H04M 1/725

(54) **Method of changing a user interface to be a dedicated Skype(tm) interface and computer program product thereof and handheld electronic device**

(30) Priority: 24.03.2014 TW 103110826
(71) Applicant: Linktel Inc., Taipei 106 (TW)
(72) Inventor: Lee, Hong-Lin, 106 Taipei (TW); Tsai, Wen-Hsiung, 106 Taipei (TW); Yang, Tzi-i, 106 Taipei (TW)
(74) Representative: Altenburg, Bernardus Stephanus Franciscus

(57) **Abstract**

A method of changing a user interface to be a dedicated Skype™ interface is disclosed. The method is applied to a handheld electronic device (1) which has a screen (20), and a plurality of application programs are installed in the handheld electronic device (1). A built-in user interface (UI1) is displayed by the screen (20). A plurality of icons corresponding to the application programs are displayed on the screen (20) via the built-in user interface (UI1). The method includes the following steps: receiving a setting change command, and changing the built-in user interface (UI1) to be a dedicated Skype™ interface (UI2).

## Description

### BACKGROUND OF THE INVENTION

### Field of the Invention

The present invention relates to a method of changing a user interface; more particularly, the present invention relates to a method of changing an original user interface of a handheld electronic device to be a dedicated Skype™ interface.

### Description of the Related Art

As communication technology develops, besides via the traditional telephone system, telephony can also be executed via a computer network. As the network bandwidth gradually increases, in addition to via the voice method, network communication can also be executed via the video call method, which highly increases the convenience of communication. Many network communication software programs have gradually become essential social and commercial communication tools, wherein Skype™ is one of those communication software programs.

Currently, Skype™ communication software is downloaded to a computer or a cellphone by the user for installation and execution. However, when the user needs to use Skype™ to communicate, the user must execute the Skype™ software in the computer before making a telephone call or using other functions of the software, which is very inconvenient for a user who needs to use Skype™ frequently.

### SUMMARY OF THE INVENTION

It is an object of the present invention to provide a method of changing a user interface of a handheld electronic device to be a dedicated Skype™ interface.

It is another object of the present invention to provide a computer program product and a handheld electronic device to execute the abovementioned method.

To achieve the abovementioned object, the method of changing a user interface to be a dedicated Skype™ interface of the present invention is applied to a handheld electronic device, wherein the handheld electronic device has a screen, and a plurality of application programs are installed in the handheld electronic device. A built-in user interface is displayed by the screen. A plurality of icons corresponding to the application programs are displayed on the screen via the built-in user interface. The method includes the following steps: receiving a setting change command, and changing the built-in user interface to be a dedicated Skype™ interface. At least one icon corresponding to at least one of the plurality of application programs is not to be displayed on the screen via the dedicated Skype™ interface, which means at least one of the plurality of icons displayed on the screen via the built-in user interface cannot be displayed on the screen via the dedicated Skype™ interface, such that the hidden icon and the corresponding application program are prevented from being used by a user, allowing the handheld electronic device to become a dedicated Skype™ device.

According to one embodiment of the present invention, the handheld electronic device includes a home button. When the built-in user interface is changed to the dedicated Skype™ interface, and the home button is clicked by the user, a contact menu operation page of the dedicated Skype™ interface is displayed on the screen; the contact menu operation page includes a plurality of contact buttons for the user to click to make a telephone call.

According to one embodiment of the present invention, the plurality of application programs includes a setting application program, a browser application program, and a community interaction application program. The icons corresponding to the browser application program and the community interaction application programs are not to be displayed on the screen via the dedicated Skype™ interface.

According to one embodiment of the present invention, an icon corresponding to the setting application program is displayed on the screen via the dedicated Skype™ interface.

According to one embodiment of the present invention, an Android™ operating system or a Windows™ operating system is installed on the handheld electronic device.

The present invention also provides a computer program product and a handheld electronic device to execute the method of changing a user interface to be a dedicated Skype™ interface. The handheld electronic device includes a main body, a screen combined with the main body, a memory located in the main body, and a processor located in the main body and electrically connected to the screen and the memory. The computer program product is stored in the memory. After the handheld electronic device loads and executes the computer program product, the method of changing a user interface to be a dedicated Skype™ interface disclosed in the abovementioned description of the present invention is completed.

### BRIEF DESCRIPTION OF THE DRAWINGS

The exemplary embodiment of the present invention will be understood more fully from the detailed description given below and from the accompanying drawings of a preferred embodiment of the invention, which, however, should not be taken to prevent the invention to the specific embodiments, but are for explanation and understanding only.
FIG. 1 illustrates a system structure drawing of the handheld electronic device of the present invention.
FIG. 2 illustrates a schematic drawing of the screen of the handheld electronic device when displaying the built-in user interface.
FIG. 3 illustrates a schematic drawing of the screen of the handheld electronic device when displaying the contact menu operation page of the dedicated Skype™ interface.
FIG. 4 illustrates a schematic drawing of a user clicking the home button.
FIG. 5 illustrates a step flowchart of the method of changing a user interface to be a dedicated Skype™ interface of the present invention.

### DETAILED DESCRIPTION OF THE PREFERRED EMBODIMENT

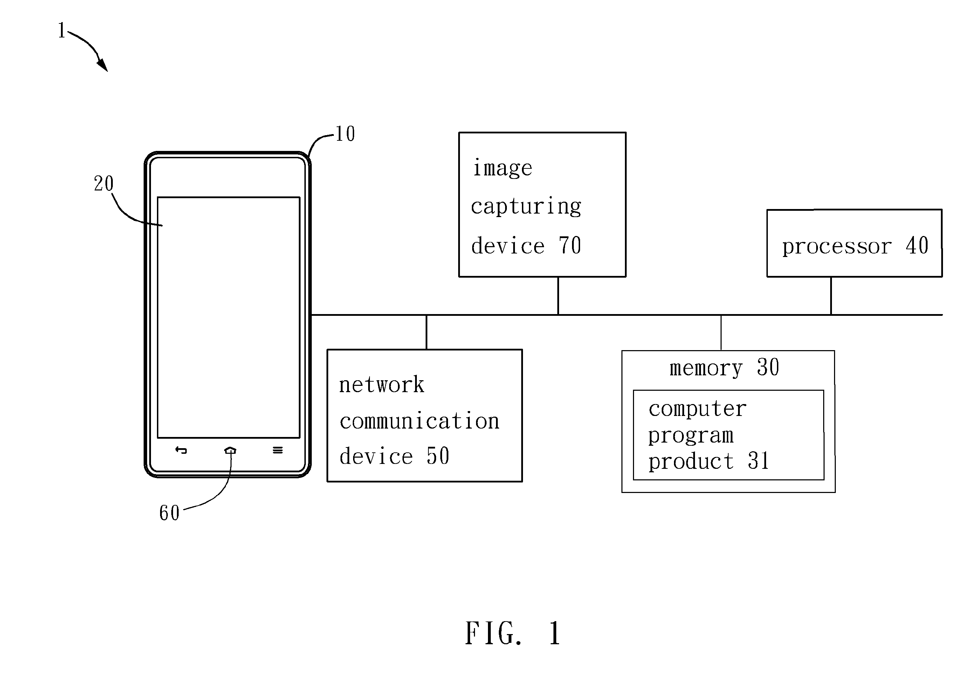

Please refer to FIG. 1 to FIG. 4, which illustrate the device structure of the handheld electronic device of the present invention.

As shown in FIG. 1, in one embodiment of the present invention, a computer program product 31 for executing the method of changing a user interface to be a dedicated Skype™ interface of the present invention is applied to a handheld electronic device 1, wherein the handheld electronic device 1 includes a main body 10, a screen 20, a memory 30, a processor 40, a network communication device 50, a home button 60, and an image capturing device 70. In addition, an Android™ operating system or a Windows™ operating system, and a plurality of application programs (not shown in the figure), are installed on the handheld electronic device 1. In the embodiment of the present invention, the handheld electronic device 1 is a smartphone, but the present invention is not limited to that design; the handheld electronic device 1 may also be a tablet computer or other similar handheld electronic product with the arithmetic processing function.

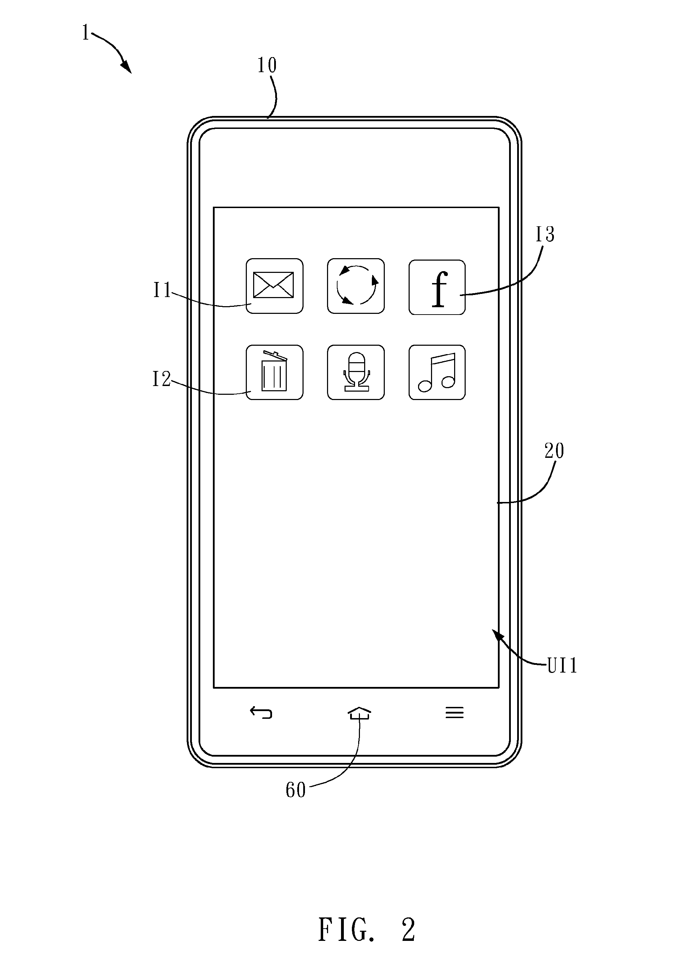

The screen 20 is combined with the main body 10. Before the handheld electronic device 1 executes the method of changing a user interface to be a dedicated Skype™ interface of the present invention, a built-in user interface UI1 is displayed on the screen 20, such as a user interface designed by a cellphone manufacturer or the user interface of an Android™ operating system. As shown in FIG. 2, which illustrates a schematic drawing of the screen 20 of the handheld electronic device 1 when displaying the built-in user interface, when the built-in user interface UI1 is displayed on the screen 20 of the handheld electronic device 1, the icons I1∼I3 corresponding to the plurality of application programs in the handheld electronic device 1 are displayed on the screen 20 via the built-in user interface UI1.

As shown in FIG. 1, the memory 30 is located in the main body 10, and the memory 30 is used for storing the computer program product 31 for executing the method of changing a user interface to be a dedicated Skype™ interface.

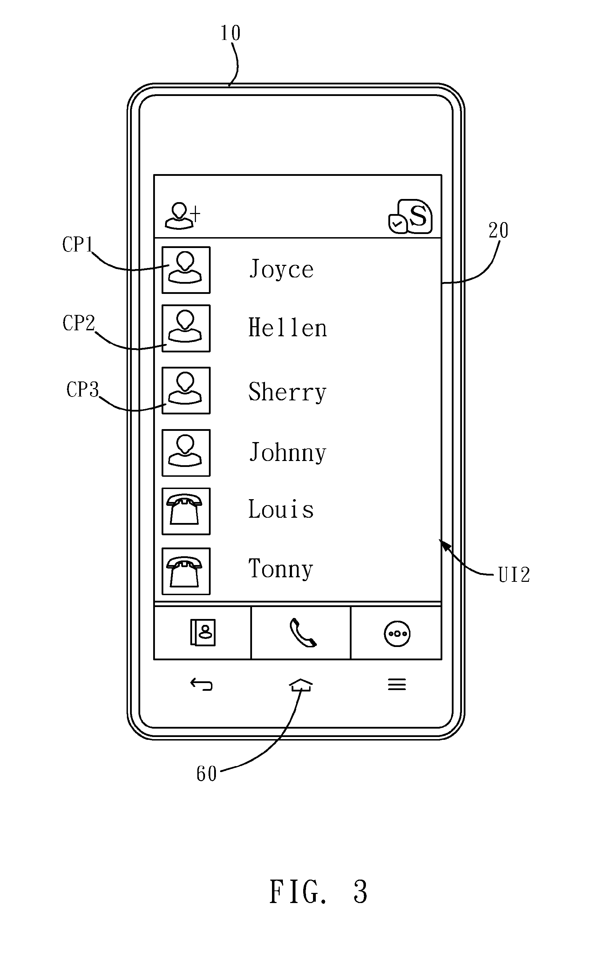

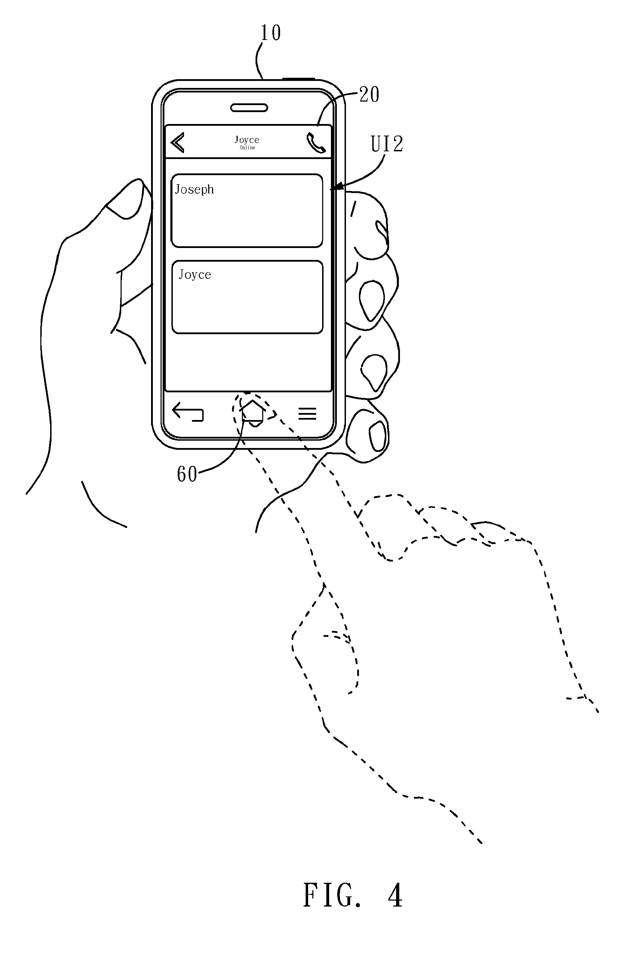

The processor 40 is located in the main body 10 and electrically connected to the screen 20 and the memory 30. The processor 40 is used for executing the computer program product 31; after the handheld electronic device 1 loads and executes the computer program product 31, the method of changing a user interface to be a dedicated Skype™ interface of the present invention is completed. After the handheld electronic device 1 completely executes the method of changing a user interface to be a dedicated Skype™ interface, the built-in user interface UI1 displayed on the screen 20 will be changed to the dedicated Skype™ interface UI2 as shown in FIG. 3 or FIG. 4; at this moment, the icons I1∼I3 corresponding to some of the plurality of application programs cannot be displayed on the screen 20 via the dedicated Skype™ interface UI2, such that some of the application programs cannot be used by the user. In one embodiment of the present invention, the application programs installed in the handheld electronic device 1 include the setting application program, the browser application program, and the community interaction application program, wherein the icons corresponding to the browser application program and the community interaction application program cannot be displayed on the screen 20 via the dedicated Skype™ interface UI2, and the icon corresponding to the setting application program is still displayed after the interface is changed, but the present invention is not limited to that design.

The network communication device 50 is located in the main body 10. The network communication device 50 is used for accessing the network such that the handheld electronic device 1 is able to communicate via the network.

In one embodiment of the present invention, the home button 60 is a physical button, and the home button 60 is combined with the main body 10, but the type of the home button 60 of the handheld electronic device 1 of the present invention is not limited to a physical button; it can also be a virtual button displayed on the screen 20 that the user can click (in this case, the screen 20 must be a touch screen). As shown in FIG. 4, in one embodiment of the present invention, when the dedicated Skype™ interface UI2 is displayed on the screen 20 of the handheld electronic device 1 and the user clicks the home button 60, a contact menu operation page (as shown in FIG. 3) of the dedicated Skype™ interface UI2 will be displayed on the screen 20 immediately, which means that no matter what page of the dedicated Skype™ interface UI2 is operated by the user (for example, the text chatting operating interface shown in FIG. 4), once the home button 60 is clicked, the contact menu operation page will be displayed on the screen 20 immediately. The contact menu operation page includes a plurality of contact buttons CP1∼CP3, allowing the user to operate the device to make a phone call.

The image capturing device 70, such as a photographic camera, is electrically connected to the processor 40. The image capturing device 70 is used for capturing an image data, such as an image of the face of the user, allowing the handheld electronic device 1 to be able to achieve the video call function.

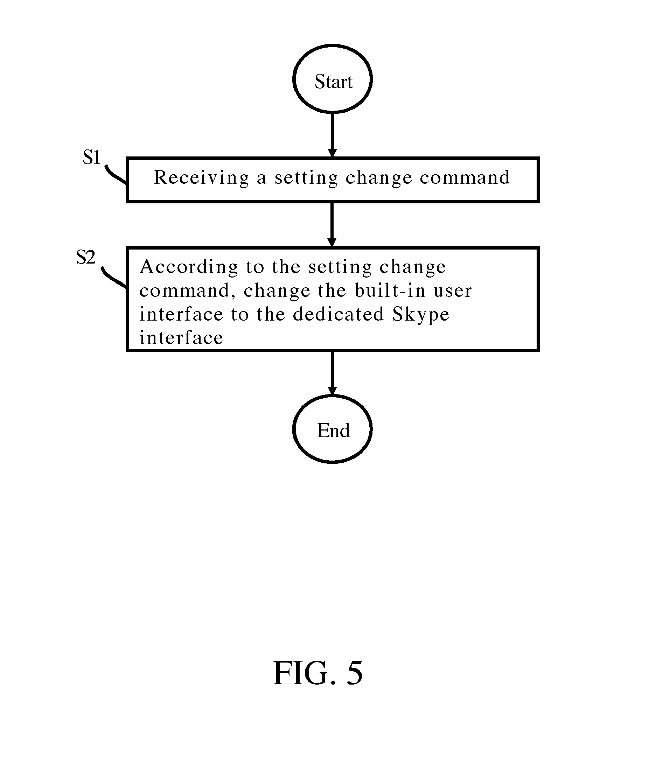

Please refer to FIG. 1 to FIG. 5, which present the details of the steps of the method of changing a user interface to be a dedicated Skype™ interface of the present invention, wherein FIG. 5 illustrates a step flowchart of the method of changing a user interface to be a dedicated Skype™ interface of the present invention. It is to be known that, although the following description uses the abovementioned handheld electronic device 1 as an example for explaining the method of changing a user interface to be a dedicated Skype™ interface of the present invention, the method is not limited to application to the abovementioned handheld electronic device 1.

Step S1: Receiving a setting change command.

In one embodiment of the present invention, the user may use a handheld electronic device 1, such as a smartphone, to download the computer program product 31 for executing the method of changing a user interface to be a dedicated Skype™ interface of the present invention on the handheld electronic device 1; then the icon corresponding to the computer program product 31 will be displayed on the screen 20 via the built-in user interface UI1 (not shown in the figure). When the user clicks the icon, the screen 20 will display a notice button (not shown in the figure) to ask the user to confirm the command to change the interface; at this moment, if the user clicks the button to confirm the command, the processor 40 will receive a setting change command, wherein the setting change command is generated because the user clicks the button.

Step S2: According to the setting change command, change the built-in user interface to the dedicated Skype™ interface.

When the processor 40 receives the setting change command, the original built-in user interface UI1 will be changed to the dedicated Skype™ interface UI2 (as shown in FIG. 3 and FIG. 4), wherein the icons I1∼I3 corresponding to some of the application programs which are displayed on the screen 20 via the built-in user interface UI1, such as the icons of the browser application program and the community interaction application program, will not be displayed on the screen 20 when the interface is changed to the dedicated Skype™ interface UI2; which means, after the interface is changed, that the user cannot see the icons I1∼I3 corresponding to some of the application programs, such that the application programs cannot be used by the user and the resources of the handheld electronic device 1 can be concentrated on the communication via Skype™. However, after the interface is changed, some icons I1∼I3 corresponding to some of the application programs can be displayed on the screen 20 via the dedicated Skype™ interface UI2, such as the setting application program, such that the user can still operate the setting application program to adjust the settings, such as the volume, the backlight brightness, or other settings.

According to the abovementioned description, when the user uses the handheld electronic device 1 to download and execute the computer program product 31 for executing the method of changing a user interface to be a dedicated Skype™ interface of the present invention, the built-in user interface UI1 displayed on the screen 20 of the handheld electronic device 1 will be changed to the dedicated Skype™ interface UI2, allowing the handheld electronic device 1 to become a handheld electronic device 1 for Skype™ communication, such that the user can use the handheld electronic device 1 to communicate via Skype™ more conveniently.

It is noted that the above-mentioned embodiment is only for illustration. It is intended that the present invention cover modifications and variations of this invention provided they fall within the scope of the following claims and their equivalents. Therefore, it will be apparent to those skilled in the art that various modifications and variations can be made to the design of the present invention without departing from the scope or spirit of the invention.

## Claims

1. A method of changing a user interface to be a dedicated Skype™ interface, applied to a handheld electronic device (1), wherein the handheld electronic device (1) comprises a screen (20), a plurality of application programs are installed in the handheld electronic device (1), a built-in user interface (UI1) is displayed by the screen (20), and a plurality of icons corresponding to the plurality of application programs are displayed on the screen (20) via the built-in user interface (UI1); the method comprising steps of:
receiving a setting change command; and
according to the setting change command, changing the built-in user interface (UI1) to be a dedicated Skype™ interface (UI2), wherein at least one icon corresponding to at least one of the plurality of application programs is not to be displayed on the screen (20) via the dedicated Skype™ interface (UI2) so that at least one application program cannot be used by a user.

2. The method as claimed in Claim 1, wherein the handheld electronic device (1) comprises a home button (60); when the built-in user interface (UI1) is changed to the dedicated Skype™ interface (UI2), and the home button (60) is clicked by the user, a contact menu operation page of the dedicated Skype™ interface (UI2) is displayed on the screen (20); the contact menu operation page comprises a plurality of contact buttons (CP1∼CP3) for the user to click to make a telephone call.

3. The method as claimed in Claim 1 or 2, wherein the plurality of application program comprises a setting application program, a browser application program, and a community interaction application program; the icons corresponding to the browser application program and the community interaction application program are not to be displayed on the screen (20) via the dedicated Skype™ interface (UI2).

4. The method as claimed in Claim 3, wherein an icon corresponding to the setting application program is displayed on the screen (20) via the dedicated Skype™ interface (UI2).

5. The method as claimed in Claim 1, wherein an Android™ operating system or a Windows™ operating system is installed on the handheld electronic device (1).

6. A computer program product for executing a method of changing a user interface to be a dedicated Skype™ interface (UI2), wherein when a handheld electronic device (1) loads and executes the computer program product, the method as claimed in Claim 1 is completed.

7. A handheld electronic device (1) with a plurality of application programs installed on the handheld electronic device (1), the handheld electronic device (1) comprising:
a main body (10);
a screen (20), combined with the main body (10), used for displaying a built-in user interface (UI1), wherein a plurality of icons corresponding to the plurality of application programs are displayed on the screen (20) via the built-in user interface (UI1);
a memory (30), located in the main body (10), for storing a computer program product (31) which executes a method of changing a user interface to be a dedicated Skype™ interface (UI2);
a processor (40), located in the main body (10) and electrically connected to the screen (20) and the memory (30), the processor (40) being used for executing the computer program product (31), to achieve the following steps:
receiving a setting change command; and
according to the setting change command, changing the built-in user interface (UI1) to a dedicated Skype™ interface (UI2), wherein at least one icon corresponding to at least one of the plurality of application programs is not to be displayed on the screen (20) via the dedicated Skype™ interface (UI2) such that the at least one application program cannot be used by a user.

8. The handheld electronic device (1) as claimed in Claim 7, wherein the handheld electronic device (1) comprises a home button (60); when the built-in user interface (UI1) is changed to the dedicated Skype™ interface (UI2), and the home button (60) is clicked by the user, a contact menu operation page of the dedicated Skype™ interface (UI2) is displayed on the screen (20); the contact menu operation page comprises a plurality of contact buttons (CP1∼CP3) for the user to click to make a telephone call.

9. The handheld electronic device (1) as claimed in Claim 7 or 8, wherein the plurality of application program comprises a setting application program, a browser application program, and a community interaction application program; the icons corresponding to the browser application program and the community interaction application program are not to be displayed on the screen (20) via the dedicated Skype™ interface (UI2).

10. The handheld electronic device (1) as claimed in Claim 9, wherein an icon corresponding to the setting application program is displayed on the screen (20) via the dedicated Skype™ interface (UI2).

11. The handheld electronic device (1) according to any of the Claims 7, 8, 9 and 10, wherein an Android™ operating system or a Windows™ operating system is installed on the handheld electronic device (1).
